# EUROPEAN PATENT APPLICATION

(11) **EP 3 975 099 A1**
(43) Date of publication of application: **30.03.2022**
(21) Application number: 21199070.0
(22) Date of filing: 27.09.2021
(51) Int. Cl.: G06Q 30/06

(54) **METHOD AND SERVER FOR AUTOMATIC MATCHMAKING FOR NEW PROJECT IN COMPONENT E-COMMERCE PLATFORM**

(30) Priority: 28.09.2020 CN 202011045043
(71) Applicant: Shenzhen Sekorm Component Network Co., Ltd, Shenzhen, Guangdong (CN)
(72) Inventor: XIAO, Qing, Shenzhen (CN); CHEN, Mantang, Shenzhen (CN)
(74) Representative: Westphal, Mussgnug & Partner, Patentanwälte mbB

(57) **Abstract**

The present invention relates to a method and a server for automatic matchmaking for a new project in a component E-commerce platform. The method includes: S101, receiving and storing commodity-supply keywords transmitted from a component supplier; SI02, receiving new project data transmitted from a project supplier, and generating project demand keywords according to the new project data; S103, matching the commodity-supply keywords with the project demand keywords; S104, transmitting the new project data to the component supplier corresponding to the commodity-supply keywords with which the project demand keywords match. The component E-commerce platform according to the present invention may carry out automatic matching with a component supplier according to project data provided by a project supplier, in order to provide an electronic component desired by the project supplier, enhance intelligentization of the component E-commerce platform, and greatly reduce the time that the project supplier spends in searching for the electronic component.

## Description

### FIELD OF THE INVENTION

The present invention relates to the field of E-commerce platforms, and more particularly to a method and a server for automatic matchmaking for a new project in a component E-commerce platform.

### DESCRIPTION OF THE RELATED ART

Known component E-commerce platforms provide services only allowing for search of components. In other words, project developers do search in the component E-commerce platforms for necessary electronic components, and this would take the project developers a lot of time because the developments of electronic products necessarily require many kinds of electronic components.

### SUMMARY OF THE INVENTION

The technical issue that the present invention aims to resolve is to provide, in view of the above-described deficiency of the prior art, a method and a server for automatic matchmaking for a new project in a component E-commerce platform.

The technical solution that the present invention adopts to resolve the technical issue is to provide a method for automatic matchmaking for a new project in a component E-commerce platform, comprising:
S101, receiving and storing commodity-supply keywords transmitted from a component supplier;
S102, receiving new project data transmitted from a project supplier, and generating project demand keywords according to the new project data;
S103, matching the commodity-supply keywords with the project demand keywords;
S104, transmitting the new project data to the component supplier corresponding to the commodity-supply keywords with which the project demand keywords match.

Further, in the method for automatic matchmaking for a new project in a component E-commerce platform according to the present invention, Step S104 comprises:
S1041, transmitting desensitized new project data to the component supplier corresponding to the commodity-supply keywords with which the project demand keywords match.

Further, in the method for automatic matchmaking for a new project in a component E-commerce platform according to the present invention, Step S104 comprises:
S1042, transmitting a portion of the new project data to a component supplier corresponding to the commodity-supply keywords with which the project demand keywords match, wherein the portion of the new project data refers to the new project data corresponding to the project demand keywords that match the component supplier.

Further, in the method for automatic matchmaking for a new project in a component E-commerce platform according to the present invention, Step S101 comprises: receiving and storing commodity-supply keywords and contact information transmitted from a component supplier;
Step S104 comprises: S1043, acquiring the contact information of the component supplier corresponding to the commodity-supply keywords with which the project demand keywords match and automatically transmitting the new project data using the contact information.

Further, the method for automatic matchmaking for a new project in a component E-commerce platform according to the present invention further comprises, after Step S104:
S105, receiving and storing a suppler answer message transmitted from the component supplier.

Further, in the method for automatic matchmaking for a new project in a component E-commerce platform according to the present invention, Step S105 comprises: receiving and storing the suppler answer message that the component supplier transmits according to a preset template;

The method further comprises, after Step S105: S106, automatically extracting and storing valid data contained in the suppler answer message.

Further, in the method for automatic matchmaking for a new project in a component E-commerce platform according to the present invention, in Step S102, generating project demand keywords according to the new project data comprises: generating the project demand keywords according to the new project data and a preset content demand corresponding relationship, the preset content demand corresponding relationship being a corresponding relationship between the project contents and the project demand keywords.

Further, the method for automatic matchmaking for a new project in a component E-commerce platform according to the present invention further comprises, prior to Step S101: transmitting an invitation message to the component supplier, the invitation message including an uploading path for the component supplier to upload the commodity-supply keywords.

Further, the method for automatic matchmaking for a new project in a component E-commerce platform according to the present invention further comprises, after Step S104:
S107, receiving newly added project contents corresponding to the new project data and generating the project demand keywords according to the newly added project contents and re-executing Step S103 and Step S104; or
S108, receiving deleted project contents corresponding to the new project data and transmitting a cancel notification to the component supplier corresponding to the project demand keywords to which the deleted project contents correspond; or
S109, receiving modified project contents corresponding to the new project data and taking the modified project data as the new project data to re-execute Step S102 to Step S104.

Further, the present invention also provides a server, and the server performs the method for automatic matchmaking for a new project in a component E-commerce platform described above.

The method and server for automatic matchmaking for a new project in a component E-commerce platform according to the present invention provide the following beneficial efficacy. The component E-commerce platform according to the present invention may carry out automatic matching with a component supplier according to project data provided by an project supplier, in order to provide an electronic component desired by the project supplier, enhance intelligentization of the component E-commerce platform, and greatly reduce the time that the project supplier spends in searching for the electronic component.

### BRIEF DESCRIPTION OF THE DRAWINGS

The present invention will be further described below with reference to the attached drawings and embodiments. In the drawings:
FIG. 1 is a flow chart illustrating a method for automatic matchmaking for a new project in a component E-commerce platform provided according to an embodiment of the present invention; and
FIG. 2 is a flow chart illustrating a method for automatic matchmaking for a new project in a component E-commerce platform provided according to an embodiment of the present invention.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

### EMBODIMENT 1

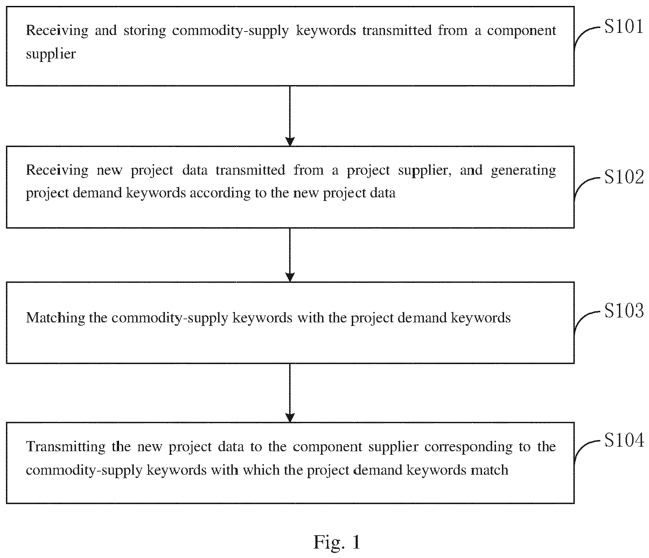

Referring to FIG. 1, a component E-commerce platform according to the instant embodiment is a network platform for selling electronic components and providing various services for exhibiting, searching, and purchasing the electronic components. The platform is presented in the form of a webpage or application program (APP), and a user may use the webpage on a computer to visit the component E-commerce platform, or may alternatively use an APP present on a mobile phone or a tablet computer to visit the component E-commerce platform. Specifically, a method for automatic matchmaking for a new project in the component E-commerce platform comprises the following steps:
S101, receiving and storing commodity-supply keywords transmitted from a component supplier.

Specifically, the component supplier needs to provide commodity-supply keywords that correspond to an electronic component supplied through the component E-commerce platform. The commodity-supply keywords describe characteristics data of the electronic component, such as technical performance, parameter index, operation functionality, category, and brand. In other words, primary indexes of the electronic component can be known from the commodity-supply keywords. The component E-commerce platform stores a corresponding relationship between the electronic component and the commodity-supply keywords for subsequent inquiry. It is appreciated that the commodity-supply keywords of a specific electronic component may be singular or plural; and a single electronic component may correspond to the commodity-supply keywords, or an assembled module that is formed by combining multiple electronic components and exhibits a certain function may also correspond to the commodity-supply keywords. To allow the component supplier to easily provide the commodity-supply keywords, the component E-commerce platform may provide a commodity-supply data fill-in template to the component supplier, and the component supplier follows the commodity-supply data fill-in template to fill in electronic component data and corresponding commodity-supply keywords. With the commodity-supply data fill-in template, the component E-commerce platform may efficiently and accurately acquire the commodity-supply keywords.

Optionally, prior to receiving and storing the commodity-supply keywords transmitted from the component supplier, the component E-commerce platform may first transmit an invitation message to the component supplier, and the invitation message includes an uploading path for the component supplier to upload the commodity-supply keywords, and the component supplier follows the uploading path to upload the commodity-supply keywords. The uploading path may take various forms, for example the component supplier transmitting the commodity-supply keywords through an account thereof in the component E-commerce platform, or the commodity-supply keywords being transmitted through an email, or alternatively, the commodity-supply keywords being transmitted by means of a real-time communication tool.

Optionally, in case that the component supplier does not transmit the commodity-supply keywords that correspond to an electronic component as required, the component E-commerce platform management may set up commodity-supply keywords for the electronic component.

S102, receiving new project data transmitted from a project supplier, and generating project demand keywords according to the new project data.

Specifically, a project supplier, in the need for purchasing an electronic component for a new project, necessarily uploads new project data to the component E-commerce platform. The component E-commerce platform has already stored a preset content demand corresponding relationship. The preset content demand corresponding relationship is a corresponding relationship between project contents and project demand keywords. The preset content demand corresponding relationship is established by the management of the component E-commerce platform according to professional knowledge and a massive amount of historic data and would possess higher reliability. Optionally, for system bettering, the preset content demand corresponding relationship is necessarily and consistently updated and improved according to subsequent user feedback, updating of the project contents, and updating of the electronic components, in order to guarantee the reliability of the corresponding relationship of the project contents and the project demand keywords. Based on this, the new project data can be handled according to the preset content demand corresponding relationship to generate the project demand keywords. In other words, the component E-commerce platform may automatically scan and extract the project contents of the new project data and consult the corresponding relationship of the project contents and the project demand keywords to generate the project demand keywords.

Optionally, the component E-commerce platform provides a project data fill-in template to the project supplier. The project supplier may follow the project data fill-in template to fill in the new project data. This would allow the component E-commerce platform to efficiently acquire the project contents included in the new project data and thus efficiently and accurately acquire the project demand keywords.

S103, matching the commodity-supply keywords with the project demand keywords.

Specifically, a corresponding relationship between the commodity-supply keywords and the project demand keywords is stored in the component E-commerce platform, and the corresponding relationship between the commodity-supply keywords and the project demand keywords is established by the management of the component E-commerce platform according to professional knowledge and a massive amount of historic data and possesses higher reliability. Optionally, to improve accuracy of matching, the corresponding relationship between the commodity-supply keywords and the project demand keywords is necessarily and consistently updated and improved according to subsequent user feedback, updating of the project contents, and updating of the electronic components, in order to guarantee the reliability of the corresponding relationship. The component E-commerce platform, after receiving the new project data transmitted from the project supplier, acquires the project demand keywords corresponding to the project contents included in the new project data according to the preset content demand corresponding relationship, and then performs matching between the commodity-supply keywords and the project demand keywords according to the corresponding relationship between the commodity-supply keywords and the project demand keywords.

S104, transmitting the new project data to the component supplier corresponding to the commodity-supply keywords with which the project demand keywords match.

Specifically, the component E-commerce platform stores contact information uploaded by the component supplier, and the component E-commerce platform, after acquiring a matching relationship between the commodity-supply keywords and the project demand keywords, transmits the new project data to the component supplier corresponding to the commodity-supply keywords with which the project demand keywords match. Optionally, Step S101 comprises: receiving and storing commodity-supply keywords and contact information transmitted from a component supplier; and, correspondingly, Step S104 comprises: S1043, acquiring the contact information of the component supplier corresponding to the commodity-supply keywords with which the project demand keywords match, wherein the system automatically transmits the new project data using the contact information, without manual intervention by the platform management and greatly saving labor cost and also heightening the efficiency. Optionally, the contact information may takes various forms, for example, the component E-commerce platform transmitting the new project data to an account of the component supplier in the platform, or the new project data being transmitted through an email, or alternatively, the new project data being transmitted by means of a real-time communication tool, or through notification made with a phone call, all the above ways being selectable as desired.

Optionally, to prevent leaking of client data, in the method for automatic matchmaking for a new project in a component E-commerce platform according to the instant embodiment, Step S104 comprises: S1041, transmitting desensitized new project data to the component supplier corresponding to the commodity-supply keywords with which the project demand keywords match, wherein desensitization refers to shielding client identity data contained in the new project data, and client identity data include, but not limited to, client name, address, contact information, and quotation price data. Desensitization may be performed by any known techniques, including deletion desensitization and alteration desensitization. Of course, desensitization of other data may be performed if necessary, and the instant embodiment imposes no specific limitation to desensitized contents.

Optionally, one single new project often needs multiple kinds of electronic components, and such electronic components may be supplied from multiple component suppliers, meaning each of the component suppliers may only need to get aware of the project contents corresponding to the electronic components that it is capable of supplying. Thus, in the method for automatic matchmaking for a new project in a component E-commerce platform according to the instant embodiment, Step S104 comprises: S1042, transmitting a portion of the new project data to a component supplier corresponding to the commodity-supply keywords with which the project demand keywords match, wherein the portion of the new project data refers to the new project data corresponding to the project demand keywords that match the component supplier. It is appreciated that such a portion of new project data may also be subjected to desensitization processing.

In the instant embodiment, the component E-commerce platform may carry out automatic matching with a component supplier according to project data provided by an project supplier, in order to provide an electronic component desired by the project supplier, enhance intelligentization of the component E-commerce platform, and greatly reduce the time that the project supplier spends in searching for the electronic component.

### EMBODIMENT 2

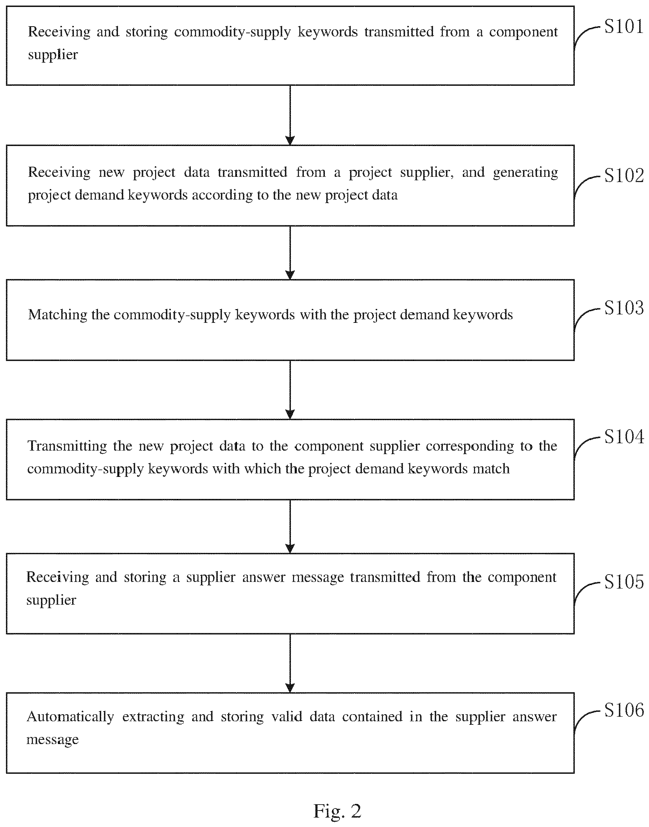

Referring to FIG. 2, on the basis of EMBODIMENT 1, a method for automatic matchmaking for a new project in a component E-commerce platform according to the instant embodiment further comprises, after Step S104:
S105, receiving and storing a supplier answer message transmitted from the component supplier.

Specifically, after receiving the new project data transmitted from the component E-commerce platform, if the component supplier intends to make a supply, the component supplier needs to transmit a suppler answer message to the component E-commerce platform. The component E-commerce platform receives and stores the suppler answer message transmitted from the component supplier. Optionally, to ease subsequent automatic statistics gathering of the suppler answer message, the instant embodiment requires the component supplier to use a preset template to fill in the suppler answer message, and the component E-commerce platform receives and stores the supplier answer message that the component supplier transmits according to the preset template.

S106, automatically extracting and storing valid data contained in the supplier answer message. The component E-commerce platform, upon receiving the supplier answer message, follows a predetermined extraction algorithm to automatically extract and store up the valid data contained in the supplier answer message for organization and classification to form a valid data assembly to be used by the management of the component E-commerce platform for greatly reducing the workload of the management.

In the instant embodiment, the component E-commerce platform is capable of automatically receiving and organizing the supplier answer message returned from the component supplier and automatically extracting and storing up the valid data contained in the supplier answer message to thereby greatly reduce the workload of the management.

### EMBODIMENT 3

Project variations may occur in the development of a project, such as addition of project contents, deletion of project contents, and modification of project contents. After a variation of a project occurs, notification is timely made to the component supplier, so that the component supplier may make a corresponding adjustment to avoid subsequent inconsistent component supply. On the basis of the above embodiments, a method for automatic matchmaking for a new project in a component E-commerce platform according to the instant embodiment further comprises, after Step S104:
S107, receiving newly added project contents corresponding to the new project data and generating the project demand keywords according to the newly added project contents and re-executing Step S103 and Step S104.
S108, receiving deleted project contents corresponding to the new project data and transmitting a cancel notification to the component supplier corresponding to the project demand keywords to which the deleted project contents correspond.
S109, receiving modified project contents corresponding to the new project data and taking the modified project data as the new project data to re-execute Step S102 to Step S104.

The instant embodiment enables efficient notification of the component supplier upon variation of the project data, so that the component supplier may make a corresponding adjustment to avoid inconsistency occurring subsequently.

### EMBODIMENT 4

In the instant embodiment, a server stores data related to various kinds of electronic components, webpage data, APP data, data of component suppliers, data of project suppliers, a preset content demand corresponding relationship, and a corresponding relationship between commodity-supply keywords and project demand keywords. The server may execute a method for automatic matchmaking for a new project in a component E-commerce platform as described in the above embodiments.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they correspond to the methods disclosed in the embodiments, the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the interchangeability of hardware and software, the illustrations provided above demonstrate the components and steps of each example with a general description according to functions thereof. Whether such functions can be implemented with hardware or software is determined by the specific application and design requirements of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical concepts and features of the present invention, for the purposes of helping those skilled in the art to understand the contents of the present invention and to accordingly put into practice, and should not be construed as limiting the scope of protection for the present invention. All variations and modifications that are considered equivalent to the scope of the appended claims of the application shall belong to the scope of the present invention as defined by the appended claims.

## Claims

1. A method for automatic matchmaking for a new project in a component E-commerce platform, **characterized by** comprising:
S101, receiving and storing commodity-supply keywords transmitted from a component supplier;
S102, receiving new project data transmitted from a project supplier, and generating project demand keywords according to the new project data;
S103, matching the commodity-supply keywords with the project demand keywords;
S104, transmitting the new project data to the component supplier corresponding to the commodity-supply keywords with which the project demand keywords match.

2. The method for automatic matchmaking for a new project in a component E-commerce platform according to claim 1, **characterized in that** Step S104 comprises:
S1041, transmitting desensitized new project data to the component supplier corresponding to the commodity-supply keywords with which the project demand keywords match.

3. The method for automatic matchmaking for a new project in a component E-commerce platform according to claim 1, **characterized in that** Step S104 comprises:
S1042, transmitting a portion of the new project data to a component supplier corresponding to the commodity-supply keywords with which the project demand keywords match, wherein the portion of the new project data refers to the new project data corresponding to the project demand keywords that match the component supplier.

4. The method for automatic matchmaking for a new project in a component E-commerce platform according to claim 1, **characterized in that** Step S101 comprises: receiving and storing commodity-supply keywords and contact information transmitted from a component supplier;
Step S104 comprises: S1043, acquiring the contact information of the component supplier corresponding to the commodity-supply keywords with which the project demand keywords match and automatically transmitting the new project data using the contact information.

5. The method for automatic matchmaking for a new project in a component E-commerce platform according to claim 1, **characterized by** further comprising, after Step S104:
S105, receiving and storing a suppler answer message transmitted from the component supplier.

6. The method for automatic matchmaking for a new project in a component E-commerce platform according to claim 5, **characterized in that** Step S105 comprises: receiving and storing the suppler answer message that the component supplier transmits according to a preset template;
further comprising, after Step S105: S106, automatically extracting and storing valid data contained in the supplier answer message.

7. The method for automatic matchmaking for a new project in a component E-commerce platform according to claim 1, **characterized in that** in Step S102, generating project demand keywords according to the new project data comprises: generating the project demand keywords according to the new project data and a preset content demand corresponding relationship, the preset content demand corresponding relationship being a corresponding relationship between the project contents and the project demand keywords.

8. The method for automatic matchmaking for a new project in a component E-commerce platform according to claim 1, **characterized by** further comprising, prior to Step S101: transmitting an invitation message to the component supplier, the invitation message including an uploading path for the component supplier to upload the commodity-supply keywords.

9. The method for automatic matchmaking for a new project in a component E-commerce platform according to claim 1, **characterized by** further comprising, after Step S104:
S107, receiving newly added project contents corresponding to the new project data and generating the project demand keywords according to the newly added project contents and re-executing Step S103 and Step S104; or
S108, receiving deleted project contents corresponding to the new project data and transmitting a cancel notification to the component supplier corresponding to the project demand keywords to which the deleted project contents correspond; or
S109, receiving modified project contents corresponding to the new project data and taking the modified project data as the new project data to re-execute Step SI02 to Step S104.

10. A server, **characterized in that** the server performs the method for automatic matchmaking for a new project in a component E-commerce platform according to any one of claims 1-9.
